(19) Europäisches Patentamt
European Patent Office
Office européen des brevets

(11) **EP 2 643 420 B1**

(12) **FASCICULE DE BREVET EUROPEEN**

(45) Date de publication et mention
de la délivrance du brevet:
**13.08.2014 Bulletin 2014/33**

(21) Numéro de dépôt: **11802477.7**

(22) Date de dépôt: **08.11.2011**

(51) Int Cl.:
**C09K 5/04** $^{(2006.01)}$

(86) Numéro de dépôt international:
**PCT/FR2011/052589**

(87) Numéro de publication internationale:
**WO 2012/069725 (31.05.2012 Gazette 2012/22)**

(54) **FLUIDES FRIGORIFIQUES CONTENANT DU (E)-1,1,1,4,4,4-HEXAFLUOROBUT-2-ENE**

(E)-1,1,1,4,4,4-HEXAFLUORBUT-2-EN ENTHALTENDE KÜHLMITTEL

REFRIGERANTS CONTAINING (E)-1,1,1,4,4,4-HEXAFLUOROBUT-2-ENE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.11.2010 FR 1059728**

(43) Date de publication de la demande:
**02.10.2013 Bulletin 2013/40**

(73) Titulaire: **Arkema France
92700 Colombes (FR)**

(72) Inventeur: **RACHED, Wissam
F-69630 Chaponost (FR)**

(74) Mandataire: **Dang, Doris et al
ARKEMA FRANCE
Département Propriété Industrielle
420, rue d'Estienne d'Orves
92705 Colombes Cedex (FR)**

(56) Documents cités:
**US-A1- 2010 163 776     US-A1- 2010 243 943**

**Description**

DOMAINE DE L'INVENTION

La présente invention concerne des compositions contenant du (E)-1,1,1,4,4,4-hexafluorobut-2-ène en mélange avec au moins un autre composé hydrocarbure ou dérivé d'hydrocarbure, et leur utilisation en tant que fluides de transfert de chaleur.

ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

Le document WO 2007/053697 décrit des compositions à base de fluorooléfines dans diverses utilisations, et notamment en tant que fluides de transfert de chaleur. Le document mentionne le 1,1,1,4,4,4-hexafluorobut-2-ène.

Le document WO 2008/134061 décrit des compositions azéotropiques ou quasi-azéotropiques comprenant du (Z)-1,1,1,4,4,4-hexafluorobut-2-ène en combinaison avec du méthylformate, du pentane, du 2-méthylbutane, du 1,1,1,3,3-pentafluorobutane, du trans-1,2-dichloroéthylène ou du 1,1,1,3,3-pentafluoropropane.

Le document WO 2008/154612 décrit des compositions azéotropiques ou quasi-azéotropiques comprenant du (E)-1,1,1,4,4,4-hexafluorobut-2-ène en combinaison avec du méthylformate, du n-pentane, du 2-méthylbutane, du trans-1,2-dichloroéthylène, du 1,1,1,3,3-pentafluoropropane, du n-butane ou de l'isobutane.

Le document WO 2010/055146 décrit des fluorooléfines et leur procédé de fabrication. Le document mentionne en particulier le (E)-1,1,1,4,4,4-hexafluorobut-2-ène.

Le document WO 2010/100254 décrit des tétrafluorobutènes, éventuellement en mélange avec des hexafluorobutènes, et leur utilisation dans diverses applications dont le transfert de chaleur.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques et / ou qui présentent de bonnes performances énergétiques par rapport à des fluides de transfert de chaleur usuels (tel que l'isobutane) et / ou des performances énergétiques améliorées par rapport aux fluides de transfert de chaleur à bas GWP connus (tel que le 1,3,3,3-tétrafluoropropène).

RESUME DE L'INVENTION

L'invention concerne en premier lieu une composition comprenant du (E)-1,1,1,4,4,4-hexafluorobut-2-ène en mélange avec au moins un composé hydrocarbure, hydrofluorocarbure, éther, hydrofluoroéther ou fluorooléfine présentant un point d'ébullition inférieur ou égal à -12°C.

Selon un mode de réalisation, le composé est choisi parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane, le propane, le diméthyléther et les mélanges de ceux-ci.

Selon un mode de réalisation, la composition consiste en un mélange de :

- (E)-1,1,1,4,4,4-hexafluorobut-2-ène et un composé choisi parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane, le diméthyléther et le propane ; ou
- (E)-1,1,1,4,4,4-hexafluorobut-2-ène et deux composés choisis parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane, le propane, le diméthyléther et l'isobutane.

Selon un mode de réalisation, la composition comprend et de préférence consistant en un mélange de :

- (E)-1,1,1,4,4,4-hexafluorobut-2-ène et 1,3,3,3-tétrafluoropropène ;
- (E)-1,1,1,4,4,4-hexafluorobut-2-ène et 2,3,3,3-tétrafluoropropène ;
- (E)-1,1,1,4,4,4-hexafluorobut-2-ène et 3,3,3-trifluoropropène ;
- (E)-1, 1, 1,4,4,4-hexafluorobut-2-ène et 1,1,1,2-tétrafluoroéthane ;
- (E)-1,1,1,4,4,4-hexafluorobut-2-ène et 1,1-difluoroéthane ;
- (E)-1,1,1,4,4,4-hexafluorobut-2-ène et difluorométhane ;
- (E)-1,1,1,4,4,4-hexafluorobut-2-ène et propane ;
- (E)-1,1,1,4,4,4-hexafluorobut-2-ène, 1,1,1,2-tétrafluoroéthane et 1,3,3,3-tétrafluoropropène ;
- (E)-1,1,1,4,4,4-hexafluorobut-2-ène, 1,1,1,2-tétrafluoroéthane et 2,3,3,3-tétrafluoropropène ;
- (E)-1,1,1,4,4,4-hexafluorobut-2-ène, 1,1,1,2-tétrafluoroéthane et 1,1-difluoroéthane ;
- (E)-1,1,1,4,4,4-hexafluorobut-2-ène, 1,1,1,2-tétrafluoroéthane et 3,3,3-trifluoropropène ;
- (E)-1,1,1,4,4,4-hexafluorobut-2-ène, 1,1,1,2-tétrafluoroéthane et isobutane ;
- (E)-1,1,1,4,4,4-hexafluorobut-2-ène, 1,1,1,2-tétrafluoroéthane et propane ;
- (E)-1,1,1,4,4,4-hexafluorobut-2-ène, isobutane et 1,3,3,3-tétrafluoropropène ;
- (E)-1,1,1,4,4,4-hexafluorobut-2-ène, isobutane et 2,3,3,3-tétrafluoropropène ;
- (E)-1,1,1,4,4,4-hexafluorobut-2-ène, isobutane et 1,1-difluoroéthane ;
- (E)-1,1,1,4,4,4-hexafluorobut-2-ène, isobutane et propane ;
- (E)-1,1,1,4,4,4-hexafluorobut-2-ène, 3,3,3-trifluoropropène et 2,3,3,3-tétrafluoropropène ;
- (E)-1,1,1,4,4,4-hexafluorobut-2-ène, 3,3,3-trifluoropropène et 1,3,3,3-tétrafluoropropène ;
- (E)-1,1,1,4,4,4-hexafluorobut-2-ène, 3,3,3-trifluoropropène et isobutane ;
- (E)-1,1,1,4,4,4-hexafluorobut-2-ène, 3,3,3-trifluoropropène et 1,1-difluoroéthane ;
- (E)-1,1,1,4,4,4-hexafluorobut-2-ène, 3,3,3-trifluoropropène et propane ;
- (E)-1,1,1,4,4,4-hexafluorobut-2-ène, 1,3,3,3-tétrafluoropropène et 2,3,3,3-tétrafluoropropène ;
- (E)-1,1,1,4,4,4-hexafluorobut-2-ène, 1,3,3,3-tétrafluoropropène et propane ;
- (E)-1,1,1,4,4,4-hexafluorobut-2-ène, 1,3,3,3-tétrafluoropropène et 1,1-difluoroéthane ;
- (E)-1,1,1,4,4,4-hexafluorobut-2-ène, 2,3,3,3-tétrafluoropropène et propane ;
- (E)-1,1,1,4,4,4-hexafluorobut-2-ène, 2,3,3,3-tétrafluoropropène et 1,1-difluoroéthane ;
- (E)-1,1,1,4,4,4-hexafluorobut-2-ène, 1,1-difluoroéthane et propane ;
- (E)-1,1,1,4,4,4-hexafluorobut-2-ène, pentafluoroéthane et 1,3,3,3-tétrafluoropropène ;
- (E)-1,1,1,4,4,4-hexafluorobut-2-ène, pentafluoroéthane et 2,3,3,3-tétrafluoropropène ;
- (E)-1,1,1,4,4,4-hexafluorobut-2-ène, pentafluoroéthane et 3,3,3-trifluoropropène
- (E)-1,1,1,4,4,4-hexafluorobut-2-ène, pentafluoroéthane et 1,1-difluoroéthane ;
- (E)-1,1,1,4,4,4-hexafluorobut-2-ène, pentafluoroéthane et difluorométhane ;
- (E)-1,1,1,4,4,4-hexafluorobut-2-ène, pentafluoroéthane et 1,1,1,2-tétrafluoroéthane.

Selon un mode de réalisation, la différence entre la pression de saturation liquide et la pression de saturation vapeur de la composition à une température de -5°C est inférieure ou égale à 10 % de la pression de saturation liquide, et de préférence la composition comprend ou consiste en :

- de 1 à 8 % de (E)-1,1,1,4,4,4-hexafluorobut-2-ène et de 92 à 99 % de 2,3,3,3-tétrafluoropropène ; ou
- de 1 à 12 % de (E)-1,1,1,4,4,4-hexafluorobut-2-ène et de 88 à 99 % de 1,3,3,3-tétrafluoropropène ; ou
- de 1 à 9 % de (E)-1,1,1,4,4,4-hexafluorobut-2-ène et de 91 à 99 % de 1,1,1,2-tétrafluoroéthane ; ou
- de 1 à 6 % de (E)-1,1,1,4,4,4-hexafluorobut-2-ène et de 94 à 99 % de difluorométhane ; ou
- de 1 à 17 % de (E)-1,1,1,4,4,4-hexafluorobut-2-ène et de 83 à 99 % de 1,1-difluoroéthane ; ou
- de 1 à 26 % de (E)-1,1,1,4,4,4-hexafluorobut-2-ène et de 74 à 99 % de propane ; ou
- de 1 à 10 % de (E)-1,1,1,4,4,4-hexafluorobut-2-ène et de 90 à 99 % de 3,3,3-trifluoropropène ; ou
- de 1 à 10 % de (E)-1,1,1,4,4,4-hexafluorobut-2-ène, de 1 à 98 % de 1,1,1,2-tétrafluoroéthane et de 1 à 98 % de 1,3,3,3-tétrafluoropropène ; ou
- de 1 à 8 % de (E)-1,1,1,4,4,4-hexafluorobut-2-ène, de 1 à 98 % de 1,1,1,2-tétrafluoroéthane et de 1 à 98 % de 2,3,3,3-tétrafluoropropène ; ou
- de 1 à 15 % de (E)-1,1,1,4,4,4-hexafluorobut-2-ène, de 1 à 98 % de 1,1,1,2-tétrafluoroéthane et de 1 à 98 % de 1,1-difluoroéthane ; ou
- de 1 à 8 % de (E)-1,1,1,4,4,4-hexafluorobut-2-ène, de 1 à 98 % de 2,3,3,3-tétrafluoropropène et de 1 à 98 % de 3,3,3-trifluoropropène ; ou

- de 1 à 8 % de (E)-1,1,1,4,4,4-hexafluorobut-2-ène, de 1 à 98 % de 1,1,1,2-tétrafluoroéthane et de 1 à 98 % de 3,3,3-trifluoropropène ; ou
- de 1 à 8 % de (E)-1,1,1,4,4,4-hexafluorobut-2-ène, de 1 à 98 % de 2,3,3,3-tétrafluoropropène et de 1 à 98 % de 1,3,3,3-tétrafluoropropène ; ou
- de 1 à 20 % de (E)-1,1,1,4,4,4-hexafluorobut-2-ène, de 1 à 30 % de 1,1,1,2-tétrafluoroéthane et de 50 à 98 % de propane ; ou
- de 1 à 20 % de (E)-1,1,1,4,4,4-hexafluorobut-2-ène, de 1 à 98 % de 2,3,3,3-tétrafluoropropène et de 1 à 98 % de propane ; ou
- de 1 à 13 % de (E)-1,1,1,4,4,4-hexafluorobut-2-ène, de 1 à 98 % de 2,3,3,3-tétrafluoropropène et de 1 à 98 % de 1,1-difluoroéthane ; ou
- de 1 à 15 % de (E)-1,1,1,4,4,4-hexafluorobut-2-ène, de 1 à 98 % de 1,3,3,3-tétrafluoropropène et de 1 à 98 % de 1,1-difluoroéthane ; ou
- de 1 à 20 % de (E)-1,1,1,4,4,4-hexafluorobut-2-ène, de 1 à 98 % de 1,3,3,3-tétrafluoropropène et de 1 à 98 % de propane.

Selon un mode de réalisation, la composition comprend et de préférence consiste en :

- de 10 à 50 % de (E)-1,1,1,4,4,4-hexafluorobut-2-ène et de 50 à 90 % de 1,3,3,3-tétrafluoropropène, de préférence de 30 à 40 % de (E)-1,1,1,4,4,4-hexafluorobut-2-ène et de 60 à 70 % de 1,3,3,3-tétrafluoropropène ; ou
- de 55 à 95 % de (E)-1,1,1,4,4,4-hexafluorobut-2-ène et de 5 à 45 % de 1,1,1,2-tétrafluoroéthane ; ou
- de 1 à 98 % de (E)-1,1,1,4,4,4-hexafluorobut-2-ène, de 1 à 98 % de 2,3,3,3-tétrafluoropropène et de 1 à 50 % de 1,1,1,2-tétrafluoroéthane, de préférence de 2 à 60 % de (E)-1,1,1,4,4,4-hexafluorobut-2-ène, de 2 à 93 % de 2,3,3,3-tétrafluoropropène et de 5 à 50 % de 1,1,1,2-tétrafluoroéthane et de manière plus particulièrement préférée de 5 à 45 % de (E)-1,1,1,4,4,4-hexafluorobut-2-ène, de 11 à 86 % de 2,3,3,3-tétrafluoropropène et de 9 à 44 % de 1,1,1,2-tétrafluoroéthane ; ou
- de 1 à 98 % de (E)-1,1,1,4,4,4-hexafluorobut-2-ène, de 1 à 98 % de 1,3,3,3-tétrafluoropropène et de 1 à 40 % de 1,1,1,2-tétrafluoroéthane, de préférence de 2 à 40 % de (E)-1,1,1,4,4,4-hexafluorobut-2-ène, de 20 à 93 % de 1,3,3,3-tétrafluoropropène et de 5 à 40 % de 1,1,1,2-tétrafluoroéthane et de manière plus particulièrement préférée de 2 à 35 % de (E)-1,1,1,4,4,4-hexafluorobut-2-ène, de 33 à 89 % de 1,3,3,3-tétrafluoropropène et de 9 à 32 % de 1,1,1,2-tétrafluoroéthane.

L'invention concerne également l'utilisation de la composition ci-dessus, en tant que fluide de transfert de chaleur.

L'invention concerne également une composition de transfert de chaleur, comprenant la composition ci-dessus ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant une composition telle que décrite ci-dessus en tant que fluide de transfert de chaleur ou contenant une composition de transfert de chaleur telle que décrite ci-dessus.

Selon un mode de réalisation, l'installation est choisie parmi les installations mobiles ou stationnaires de chauffage par pompe à chaleur, de climatisation, de réfrigération, de congélation et les cycles de Rankine.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition telle que décrite ci-dessus.

Selon un mode de réalisation, ce procédé est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition telle que décrite ci-dessus.

La présente invention permet de surmonter les inconvénients de l'état de la technique. Elle fournit plus particulièrement des fluides de transfert de chaleur à bas GWP, susceptibles de remplacer les fluides de transfert de chaleur usuels.

En particulier, dans certains modes de réalisation, l'invention fournit des fluides de transfert de chaleur quasi-azéotropiques. Dans certains modes de réalisation, l'invention fournit des fluides de transfert de chaleur qui présentent de bonnes performances énergétiques par rapport à des fluides de transfert de chaleur usuels et / ou présentent des performances énergétiques améliorées par rapport aux fluides de transfert de chaleur à bas GWP connus (notamment par rapport au 1,3,3,3-tétrafluoropropène).

Ceci est accompli grâce à des mélanges comprenant d'une part du 1,1,1,4,4,4-hexafluorobut-2-ène sous forme trans, et d'autre part au moins un composé hydrocarbure, hydrofluorocarbure ou fluorooléfine présentant un point d'ébullition inférieur ou égal à -12°C. Ce composé est de préférence choisi parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le propane et les mélanges de ceux-ci.

Les compositions selon l'invention présentent une capacité volumétrique améliorée par rapport aux compositions divulguées dans le document WO 2008/154612 (dans lequel les composés associés au (E)-1,1,1,4,4,4-hexafluorobut-2-ène présentent un point d'ébullition supérieur à -12°C).

Les compositions selon l'invention présentent également une capacité volumétrique supérieure à des compositions analogues dans lesquelles le (E)-1,1,1,4,4,4-hexafluorobut-2-ène serait remplacé en tout ou partie par le (Z)-1,1,1,4,4,4-hexafluorobut-2-ène.

## DESCRIPTION DE MODES DE REALISATION DE L'INVENTION

L'invention est maintenant décrite plus en détail et de façon non limitative dans la description qui suit.

Les composés utilisés dans le cadre de l'invention sont notés comme suit :

- (E)-1,1,1,4,4,4-hexafluorobut-2-ène : HFO-E-1336mzz ;
- 1,3;3,3-tétrafluoropropène : HFO-1234ze ;
- 2,3,3,3-tétrafluoropropène : HFO-1234yf ;
- 3,3,3-trifluoropropène : HFO-1243zf ;
- 1,1,1,2-tétrafluoroéthane : HFC-134a ;
- 1,1,-difluoroéthane : HFC-152a ;
- difluorométhane : HFC-32 ;
- pentafluoroéthane : HFC-125 ;
- propane : HC-290 ;
- isobutane : HC-600a ;
- diméthyléther : DME.

Sauf mention contraire, dans l'ensemble de la demande les proportions de composés indiquées sont données en pourcentages massiques.

Le HFO-1234ze peut être sous forme cis ou trans ou être un mélange de ces deux formes. De préférence il est sous forme trans (E).

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par *« composé de transfert de chaleur »*, respectivement *« fluide de transfert de chaleur »* (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par *« composition de transfert de chaleur »* on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions qui comprennent du HFO-E-1336mzz en combinaison avec au moins un composé hydrocarbure, éther, hydrofluoroéther, hydrofluorocarbure ou fluorooléfine (de préférence un composé hydrofluorocarbure ou fluorooléfine) de point d'ébullition inférieur ou égal à -12°C à la pression de 101,325 kPa.

Le point d'ébullition peut être mesuré selon la norme NF EN 378-1 d'avril 2008.

Le HC-600a présente un point d'ébullition supérieur à -12°C et n'est donc pas concerné.

De préférence, le composé est choisi parmi le HFO-1234yf, le HFO-1234ze, le HFO-1243zf, le HFC-134a, le HFC-32, le HFC-152a, le HFC-125, le DME et le HC-290.

En particulier, les compositions ci-dessus peuvent être des mélanges binaires ou ternaires de composés. Dans le cas des mélanges ternaires, le fluide de transfert de chaleur peut comprendre du HFO-E-1336mzz en combinaison avec deux composés choisis parmi le HFO-1234yf, le HFO-1234ze, le HFO-1243zf, le HFC-134a, le HFC-32, le HFC-152a, le HFC-125, le DME et le HC-290; ou bien du HFO-E-1336mzz en combinaison avec un composé choisi parmi le HFO-1234yf, le HFO-1234ze, le HFO-1243zf, le HFC-134a, le HFC-32, le HFC-152a, le HFC-125, le DME et le HC-290 ainsi qu'un composé supplémentaire, de préférence choisi parmi les hydrocarbures, les hydrochlorofluorocarbures, les hydrofluorocarbures, les fluoroéthers, les éthers d'hydrocarbures, l'ammoniac et le dioxyde de carbone, et de manière plus particulièrement préférée le HC-600a.

Selon un mode de réalisation, les compositions ci-dessus ne contiennent pas de HC-600a, éventuellement pas de HC-290, et éventuellement pas d'hydrocarbure.

Selon un mode de réalisation, les compositions ci-dessus comprennent uniquement des fluorooléfines et / ou hydrofluorocarbures.

Parmi les compositions ci-dessus, certaines présentent l'avantage d'être quasi-azéotropiques.

On désigne par « *quasi-azéotropiques* » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide). Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

En particulier, les mélanges binaires ou ternaires présentant les compositions suivantes sont quasi-azéotropiques à une température de référence de -5 °C :

- de 1 à 8 % de HFO-E-1336mzz et de 92 à 99 % de HFO-1234yf ;
- de 1 à 12 % de HFO-E-1336mzz et de 88 à 99 % de HFO-1234ze ; ou
- de 1 à 9 % de HFO-E-1336mzz et de 91 à 99 % de H FC-1 34a ; ou
- de 1 à 6 % de HFO-E-1336mzz et de 94 à 99 % de HFC-32 ; ou
- de 1 à 17 % de HFO-E-1336mzz et de 83 à 99 % de HFC-152a ; ou
- de 1 à 26 % de HFO-E-1336mzz et de 74 à 99 % de HC-290 ; ou
- de 1 à 10 % de HFO-E-1336mzz et de 90 à 99 % de HFO-1243zf ; ou
- de 1 à 10 % de HFO-E-1336mzz, de 1 à 98 % de HFC-134a et de 1 à 98 % de HFO-1234ze ; ou
- de 1 à 8 % de HFO-E-1336mzz, de 1 à 98 % de HFC-134a et de 1 à 98 % de HFO-1234yf ; ou
- de 1 à 15 % de HFO-E-1336mzz, de 1 à 98 % de HFC-134a et de 1 à 98 % de HFC-152a ; ou
- de 1 à 8 % de HFO-E-1336mzz, de 1 à 98 % de HFO-1234yf et de 1 à 98 % de HFO-1243zf ; ou
- de 1 à 8 % de HFO-E-1336mzz, de 1 à 98 % de HFC-134a et de 1 à 98 % de HFO-1243zf ; ou
- de 1 à 8 % de HFO-E-1336mzz, de 1 à 98 % de HFO-1234yf et de 1 à 98 % de HFO-1234ze ; ou
- de 1 à 20 % de HFO-E-1336mzz, de 1 à 30 % de HFC-134a et de 50 à 98 % de HC-290 ; ou
- de 1 à 20 % de HFO-E-1336mzz, de 1 à 98 % de HFO-1234yf et de 1 à 98 % de HC-290 ; ou
- de 1 à 13 % de HFO-E-1336mzz, de 1 à 98 % de HFO-1234yf et de 1 à 98 % de HFC-152a ; ou
- de 1 à 15 % de HFO-E-1336mzz, de 1 à 98 % de HFO-1234ze et de 1 à 98 % de HFC-1 52a ; ou
- de 1 à 20 % de HFO-E-1336mzz, de 1 à 98 % de HFO-1234ze et de 1 à 98 % de HC-290.

En outre, on a trouvé que certaines compositions selon l'invention présentent des performances améliorées par rapport au HFO-1234ze, et qui sont proches de celles du HC-600a, en particulier pour les procédés de refroidissement ou de chauffage à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C). Ces compositions sont notamment les mélanges binaires ou ternaires suivants :

- de 10 à 50 % de HFO-E-1336mzz et de 50 à 90 % de HFO-1234ze (notamment de 30 à 40 % de HFO-E-1336mzz et de 60 à 70 % de HFO-1234ze) ;
- de 55 à 95 % de HFO-E-1336mzz et de 5 à 45 % de HFC-134a ;
- de 1 à 98 % de HFO-E-1336mzz, de 1 à 98 % de HFO-1234ze et de 1 à 40 % de HFC-134a, de préférence de 2 à 40 % de HFO-E-1336mzz, de 20 à 93 % de HFO-1234ze et de 5 à 40 % de HFC-134a et de manière plus particulièrement préférée de 2 à 35 % de HFO-E-1336mzz, de 33 à 89 % de HFO-1234ze et de 9 à 32 % de HFC-134a;
- de 1 à 98 % de HFO-E-1336mzz, de 1 à 98 % de HFO-1234yf et de 1 à 50 % de HFC-134a, de préférence de 2 à 60 % de HFO-E-1336mzz, de 2 à 93 % de HFO-1234yf et de 5 à 50 % de HFC-134a et de manière plus particulièrement préférée de 5 à 45 % de HFO-E-1336mzz, de 11 à 86 % de HFO-1234yf et de 9 à 44 % de HFC-134a.

Dans les procédés de « *refroidissement ou de chauffage à température modérée* » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55°C et par exemple d'environ 50°C. Ces procédés peuvent être des procédés de réfrigération, de climatisation ou de chauffage.

Les compositions selon l'invention peuvent également être utiles en tant qu'agent d'expansion, aérosol ou solvant.

EXEMPLES

Les exemples suivants illustrent l'invention sans la limiter.

Exemple 1 - méthode de calcul des propriétés des fluides de transfert de chaleur dans les différentes configiurations envisagées

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur les HFC sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression des HFO sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesll) en phase gazeuse utilisant un catharomètre (TCD).

Les mesures d'équilibre liquide vapeur sur le binaire HFC-134a / HFO-1234ze sont réalisées pour l'isotherme suivante : 20°C.

Les mesures d'équilibre liquide vapeur sur le binaire HFC-134a / HFO-1234yf sont réalisées pour l'isotherme suivante : 20°C.

Les données d'équilibre liquide vapeur pour le binaire HFO-1243zf / HFO-1234yf sont réalisées pour l'isotherme suivante : 21 °C.

Les mesures d'équilibre liquide vapeur sur le binaire HFC-134a / HFO-1243zf sont réalisées pour l'isotherme suivante : 10°C.

Les mesures d'équilibre liquide vapeur sur le binaire HFO-1234ze / HFO-1234yf sont réalisées pour l'isotherme suivante : 18°C.

Les mesures d'équilibre liquide vapeur sur le binaire HC-290 / HFO-1234yf sont réalisées pour les isothermes suivantes : -10 et 55°C.

Les mesures d'équilibre liquide vapeur sur le binaire HFC-152a / HFO-1234yf sont réalisées pour l'isotherme suivante : 10°C.

Les mesures d'équilibre liquide vapeur sur le binaire HFC-152a / HFO-1234ze sont réalisées pour l'isotherme suivante : 15 °C.

Les mesures d'équilibre liquide vapeur sur le binaire HFC-134a / HFO-E-1336mzz sont réalisées pour l'isotherme suivante : 45°C.

Les mesures d'équilibre liquide vapeur sur le binaire HFC-32 / HFO-E-1336mzz sont réalisées pour l'isotherme suivante : 45 °C.

Les mesures d'équilibre liquide vapeur sur le binaire HFC-152a / HFO-E-1336mzz sont réalisées pour l'isotherme suivante : 45°C.

Les mesures d'équilibre liquide vapeur sur le binaire HC-290 / HFO-E-1336mzz sont réalisées pour l'isotherme suivante : 45 °C.

Les mesures d'équilibre liquide vapeur sur le binaire HFO-1234yf / HFO-E-1336mzz sont réalisées pour l'isotherme suivante : 45°C.

Les mesures d'équilibre liquide vapeur sur le binaire HFO-1243zf / HFO-E-1336mzz sont réalisées pour l'isotherme suivante : 45°C.

Les mesures d'équilibre liquide vapeur sur le binaire HFO-1234ze / HFO-' E-1336mzz sont réalisées pour l'isotherme suivante : 45°C.

Pour l'évaluation des performances énergétiques, on considère un système à compression équipé d'un évaporateur et condenseur à contre-courant, d'un compresseur à vis et d'un détendeur.

Le système fonctionne avec 5°C de surchauffe. La température d'évaporation est de -5°C et la température de condensation est de 50°C.

Le coefficient de performance (COP) est défini comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit (les températures T sont en K) :

$$T_{moyenne}^{condenseur} = T_{entrée}^{condenseur} - T_{sortie}^{condenseur}$$

$$T_{moyenne}^{évaporateur} = T_{sortie}^{évaporateur} - T_{entrée}^{évaporateur}$$

Le COP de Lorenz dans le cas de l'air conditionné et de la réfrigération est :

$$COPlorenz = \frac{T_{moyenne}^{évaporateur}}{T_{moyenne}^{condenseur} - T_{moyenne}^{évaporateur}}$$

Le COP de Lorenz dans le cas du chauffage est :

$$COPlorenz = \frac{T_{moyenne}^{condenseur}}{T_{moyenne}^{condenseur} - T_{moyenne}^{évaporateur}}$$

Pour chaque composition, le coefficient de performance du cycle de Lorenz est calculé en fonction des températures correspondantes.

Dans les tableaux qui suivent, « *Temp* (°*C*)» désigne la température, « *P sat liquid* » désigne la pression saturante de liquide, « *P sat vapeur* » désigne la pression saturante de vapeur, « *Diff. Pression (%)* » désigne le rapport de la différence entre la pression saturante de liquide et la pression saturante de vapeur, sur la pression saturante de liquide (en %), *« Temp sortie évap »* désigne la température du fluide à la sortie de l'évaporateur, « *Temp sortie comp* » désigne la température du fluide à la sortie du compresseur, « *T sortie cond* » désigne la température du fluide à la sortie du condenseur, « *Temp entrée détend* » désigne la température du fluide à l'entrée du détendeur, *« evap P (bar) »* désigne la pression du fluide dans l'évaporateur, *« cond P (bar) »* désigne la pression du fluide dans le condenseur, « *Taux (p/p)* » désigne le taux de compression, « *Glide* » désigne le glissement de température, *« % CAP »* désigne la capacité volumétrique du fluide par rapport au fluide de référence indiqué en première ligne, *« %COP/COPLorenz »* désigne le rapport du COP du système par rapport au COP du cycle de Lorenz correspondant.

Exemple 2 - Données pour les mélanges quasi-azéotropiques

Mélange HFO-1234yf / HFO-E-1336mzz :

| Composition (%) | | Temp. (°C) | P sat. liquide | P sat. vapeur | Diff. pression (%) |
|---|---|---|---|---|---|
| HFO- 1234yf | HFO-E- 1336mzz | | | | |
| 98 | 2 | -5 | 2,6 | 2,5 | 3 |
| 96 | 4 | -5 | 2,6 | 2,4 | 6 |
| 94 | 6 | -5 | 2,5 | 2,3 | 8 |
| 93 | 7 | -5 | 2,5 | 2,3 | 9 |

Mélange HFO-1234ze/HFO-E-1336mzz :

| Composition (%) | | Temp. (°C) | P sat. liquide | P sat. vapeur | Diff. pression (%) |
|---|---|---|---|---|---|
| HFO- 1234ze | HFO-E-1336mzz | | | | |
| 96 | 4 | -5 | 1,7 | 1,7 | 4 |
| 95 | 5 | -5 | 1,7 | 1,7 | 4 |
| 91 | 9 | -5 | 1,7 | 1,6 | 8 |
| 90 | 10 | -5 | 1,7 | 1,5 | 8 |
| 89 | 11 | -5 | 1,7 | 1,5 | 9 |
| 88 | 12 | -5 | 1,7 | 1,5 | 10 |

Mélange HFC-134a / HFO-E-1336mzz :

| Composition (%) | | Temp. (°C) | P sat. liquide | P sat. vapeur | Diff. pression (%) |
|---|---|---|---|---|---|
| HFC-134a | HFO-E- 1336mzz | | | | |
| 96 | 4 | -5 | 2,4 | 2,3 | 4 |
| 95 | 5 | -5 | 2,4 | 2,2 | 5 |
| 91 | 9 | -5 | 2,3 | 2,1 | 10 |

Mélange HFC-32 / HFO-E-1336mzz :

| Composition (%) | | Temp. (°C) | P sat. liquide | P sat. vapeur | Diff. pression (%) |
|---|---|---|---|---|---|
| HFC-32 | HFO-E- 1336mzz | | | | |
| 99 | 1 | -5 | 6,9 | 6,8 | 2 |
| 98 | 2 | -5 | 6,9 | 6,6 | 3 |
| 96 | 4 | -5 | 6,8 | 6,3 | 7 |

(suite)

| Composition (%) | | Temp. (°C) | P sat. liquide | P sat. vapeur | Diff. pression (%) |
|---|---|---|---|---|---|
| HFC-32 | HFO-E- 1336mzz | | | | |
| 95 | 5 | -5 | 6,8 | 6,2 | 9 |

Mélange HFC-152a / HFO-E-1336mzz :

| Composition (%) | | Temp. (°C) | P sat. liquide | P sat. vapeur | Diff. pression (%) |
|---|---|---|---|---|---|
| HFC-152a | HFO-E- 1336mzz | | | | |
| 98 | 2 | -5 | 2,2 | 2,2 | 1 |
| 96 | 4 | -5 | 2,2 | 2,1 | 2 |
| 94 | 6 | -5 | 2,2 | 2,1 | 4 |
| 92 | 8 | -5 | 2,1 | 2,0 | 5 |
| 90 | 10 | -5 | 2,1 | 2,0 | 6 |
| 88 | 12 | -5 | 2,1 | 2,0 | 7 |
| 86 | 14 | -5 | 2,1 | 1,9 | 8 |
| 84 | 16 | -5 | 2,1 | 1,9 | 9 |

Mélange HC-290 / HFO-E-1336mzz :

| Composition (%) | | Temp. (°C) | P sat. liquide | P sat. vapeur | Diff. pression (%) |
|---|---|---|---|---|---|
| HC-290 | HFO-E- 1336mzz | | | | |
| 98 | 2 | -5 | 4,0 | 4,0 | 0 |
| 96 | 4 | -5 | 4,0 | 4,0 | 0 |
| 94 | 6 | -5 | 4,0 | 4,0 | 1 |
| 92 | 8 | -5 | 4,0 | 4,0 | 1 |
| 90 | 10 | -5 | 4,0 | 4,0 | 1 |
| 85 | 15 | -5 | 4,0 | 3,9 | 3 |
| 80 | 20 | -5 | 3,9 | 3,7 | 5 |
| 75 | 25 | -5 | 3,9 | 3,6 | 9 |

Mélange HFO-1243zf / HFO-E-1336mzz :

| Composition (%) | | Temp. (°C) | P sat. liquide | P sat. vapeur | Diff. pression (%) |
|---|---|---|---|---|---|
| HFO-1243zf | HFO-E- 1336mzz | | | | |
| 98 | 2 | -5 | 2,3 | 2,2 | 2 |
| 96 | 4 | -5 | 2,2 | 2,1 | 4 |
| 94 | 6 | -5 | 2,2 | 2,1 | 6 |

(suite)

| Composition (%) | | Temp. (°C) | P sat. liquide | P sat. vapeur | Diff. pression (%) |
|---|---|---|---|---|---|
| HFO-1243zf | HFO-E- 1336mzz | | | | |
| 93 | 7 | -5 | 2,2 | 2,1 | 7 |
| 92 | 8 | -5 | 2,2 | 2,0 | 8 |
| 90 | 10 | -5 | 2,2 | 2,0 | 10 |

Mélange HFC-134a / HFO-1234ze / HFO-E-1336mzz :

| Composition (%) | | | Temp. (°C) | P sat. liquide | P sat. vapeur | Diff. pression (%) |
|---|---|---|---|---|---|---|
| HFC-134a | HFO-1234ze | HFO-E-1336mzz | | | | |
| 3 | 90 | 7 | -5 | 1,7 | 1,6 | 7 |
| 10 | 83 | 7 | -5 | 1,8 | 1,7 | 8 |
| 20 | 73 | 7 | -5 | 1,9 | 1,7 | 9 |
| 30 | 63 | 7 | -5 | 2,0 | 1,8 | 10 |
| 40 | 53 | 7 | -5 | 2,1 | 1,9 | 10 |
| 50 | 43 | 7 | -5 | 2,1 | 1,9 | 10 |
| 3 | 89 | 8 | -5 | 1,7 | 1,6 | 8 |
| 10 | 82 | 8 | -5 | 1,8 | 1,6 | 9 |
| 20 | 72 | 8 | -5 | 1,9 | 1,7 | 10 |
| 3 | 88 | 9 | -5 | 1,7 | 1,6 | 8 |
| 10 | 81 | 9 | -5 | 1,8 | 1,6 | 10 |
| 3 | 87 | 10 | -5 | 1,7 | 1,6 | 9 |

Mélange HFC-134a / HFO-1234yf / HFO-E-1336mzz :

| Composition (%) | | | Temp. (°C) | P sat. liquide | P sat. vapeur | Diff. pression (%) |
|---|---|---|---|---|---|---|
| HFC-134a | HFO-1234yf | HFO-E-1336mzz | | | | |
| 2 | 93 | 5 | -5 | 2,6 | 2,4 | 7 |
| 10 | 85 | 5 | -5 | 2,6 | 2,4 | 8 |
| 15 | 80 | 5 | -5 | 2,6 | 2,4 | 8 |
| 20 | 75 | 5 | -5 | 2,6 | 2,4 | 8 |
| 25 | 70 | 5 | -5 | 2,6 | 2,4 | 8 |
| 30 | 65 | 5 | -5 | 2,6 | 2,4 | 8 |
| 40 | 55 | 5 | -5 | 2,6 | 2,4 | 8 |
| 50 | 45 | 5 | -5 | 2,6 | 2,4 | 8 |
| 60 | 35 | 5 | -5 | 2,6 | 2,4 | 8 |
| 70 | 25 | 5 | -5 | 2,5 | 2,4 | 8 |

(suite)

| Composition (%) | | | Temp. (°C) | P sat. liquide | P sat. vapeur | Diff. pression (%) |
|---|---|---|---|---|---|---|
| HFC-134a | HFO-1234yf | HFO-E-1336mzz | | | | |
| 80 | 15 | 5 | -5 | 2,5 | 2,3 | 7 |
| 90 | 5 | 5 | -5 | 2,4 | 2,3 | 6 |
| 5 | 89 | 6 | -5 | 2,6 | 2,3 | 9 |
| 10 | 84 | 6 | -5 | 2,6 | 2,4 | 9 |
| 20 | 74 | 6 | -5 | 2,6 | 2,4 | 9 |
| 30 | 64 | 6 | -5 | 2,6 | 2,4 | 9 |
| 40 | 54 | 6 | -5 | 2,6 | 2,4 | 9 |
| 50 | 44 | 6 | -5 | 2,6 | 2,4 | 9 |
| 60 | 34 | 6 | -5 | 2,6 | 2,3 | 9 |
| 70 | 24 | 6 | -5 | 2,5 | 2,3 | 9 |
| 80 | 14 | 6 | -5 | 2,5 | 2,3 | 8 |
| 90 | 4 | 6 | -5 | 2,4 | 2,2 | 7 |
| 5 | 88 | 7 | -5 | 2,6 | 2,3 | 10 |
| 10 | 83 | 7 | -5 | 2,6 | 2,3 | 10 |
| 60 | 33 | 7 | -5 | 2,6 | 2,3 | 10 |
| 70 | 23 | 7 | -5 | 2,5 | 2,3 | 10 |
| 80 | 13 | 7 | -5 | 2,5 | 2,2 | 9 |
| 90 | 3 | 7 | -5 | 2,4 | 2,2 | 8 |

Mélange HFC-134a / HFC-152a / HFO-E-1336mzz :

| Composition (%) | | | Temp. (°C) | P sat. liquide | P sat. vapeur | Diff. pression (%) |
|---|---|---|---|---|---|---|
| HFC-134a | HFC-152a | HFO-E-1336mzz | | | | |
| 5 | 87 | 8 | -5 | 2,1 | 2,0 | 5 |
| 10 | 82 | 8 | -5 | 2,1 | 2,0 | 5 |
| 20 | 72 | 8 | -5 | 2,1 | 2,0 | 5 |
| 30 | 62 | 8 | -5 | 2,2 | 2,0 | 5 |
| 50 | 42 | 8 | -5 | 2,2 | 2,1 | 6 |
| 70 | 22 | 8 | -5 | 2,2 | 2,1 | 6 |
| 90 | 2 | 8 | -5 | 2,3 | 2,1 | 8 |
| 5 | 83 | 12 | -5 | 2,1 | 2,0 | 7 |
| 10 | 78 | 12 | -5 | 2,1 | 2,0 | 7 |
| 20 | 68 | 12 | -5 | 2,1 | 2,0 | 7 |
| 30 | 58 | 12 | -5 | 2,1 | 2,0 | 8 |
| 60 | 28 | 12 | -5 | 2,2 | 2,0 | 9 |
| 5 | 80 | 15 | -5 | 2,1 | 1,9 | 9 |

(suite)

| Composition (%) | | | Temp. (°C) | P sat. liquide | P sat. vapeur | Diff. pression (%) |
|---|---|---|---|---|---|---|
| HFC-134a | HFC-152a | HFO-E-1336mzz | | | | |
| 10 | 75 | 15 | -5 | 2,1 | 1,9 | 9 |
| 20 | 65 | 15 | -5 | 2,1 | 1,9 | 9 |
| 30 | 55 | 15 | -5 | 2,1 | 1,9 | 10 |
| 40 | 45 | 15 | -5 | 2,1 | 1,9 | 10 |

Mélange HFC-134a / HFO-1243zf / HFO-E-1336mzz :

| Composition (%) | | | Temp. (°C) | P sat. liquide | P sat. vapeur | Diff. pression (%) |
|---|---|---|---|---|---|---|
| HFC-134a | HFO-1243zf | HFO-E-1336mzz | | | | |
| 5 | 87 | 8 | -5 | 2,2 | 2,0 | 8 |
| 10 | 82 | 8 | -5 | 2,2 | 2,0 | 8 |
| 20 | 72 | 8 | -5 | 2,3 | 2,1 | 8 |
| 30 | 62 | 8 | -5 | 2,3 | 2,1 | 9 |
| 40 | 52 | 8 | -5 | 2,3 | 2,1 | 9 |
| 50 | 42 | 8 | -5 | 2,3 | 2,1 | 9 |
| 60 | 32 | 8 | -5 | 2,3 | 2,1 | 9 |
| 70 | 22 | 8 | -5 | 2,3 | 2,1 | 9 |
| 80 | 12 | 8 | -5 | 2,3 | 2,1 | 9 |
| 90 | 2 | 8 | -5 | 2,3 | 2,1 | 9 |

Mélange HFC-134a / HC-290 / HFO-E-1336mzz :

| Composition (%) | | | Temp. (°C) | P sat. liquide | P sat. vapeur | Diff. pression (%) |
|---|---|---|---|---|---|---|
| HFC-134a | HC-290 | HFO-E-1336mzz | | | | |
| 5 | 86 | 9 | -5 | 4,2 | 4,0 | 3 |
| 10 | 81 | 9 | -5 | 4,3 | 4,1 | 5 |
| 20 | 71 | 9 | -5 | 4,5 | 4,2 | 7 |
| 5 | 80 | 15 | -5 | 4,1 | 3,9 | 5 |
| 10 | 75 | 15 | -5 | 4,2 | 3,9 | 7 |
| 5 | 75 | 20 | -5 | 4,1 | 3,8 | 8 |

Mélange HFO-1234yf / HFO-1234ze / HFO-E-1336mzz :

| Composition (%) | | | Temp. (°C) | P sat. liquide | P sat. vapeur | Diff. pression (%) |
|---|---|---|---|---|---|---|
| HFO-1234yf | HFO-1234ze | HFO-E-1336mzz | | | | |
| 5 | 90 | 5 | -5 | 1,8 | 1,7 | 6 |
| 15 | 80 | 5 | -5 | 1,9 | 1,8 | 8 |
| 25 | 70 | 5 | -5 | 2,0 | 1,8 | 9 |
| 35 | 60 | 5 | -5 | 2,1 | 1,9 | 10 |
| 10 | 82 | 8 | -5 | 1,8 | 1,6 | 10 |

Mélange HFC-1234yf / HC-290 / HFO-E-1336mzz :

| Composition (%) | | | Temp. (°C) | P sat. liquide | P sat. vapeur | Diff. pression (%) |
|---|---|---|---|---|---|---|
| HFO-1234yf | HC-290 | HFO-E-1336mzz | | | | |
| 10 | 82 | 8 | -5 | 4,1 | 4,0 | 2 |
| 20 | 72 | 8 | -5 | 4,2 | 4,1 | 3 |
| 30 | 62 | 8 | -5 | 4,3 | 4,1 | 4 |
| 40 | 52 | 8 | -5 | 4,3 | 4,0 | 6 |
| 50 | 42 | 8 | -5 | 4,3 | 3,9 | 10 |
| 10 | 78 | 12 | -5 | 4,1 | 4,0 | 4 |
| 20 | 68 | 12 | -5 | 4,2 | 4,0 | 5 |
| 30 | 58 | 12 | -5 | 4,3 | 3,9 | 8 |
| 5 | 75 | 20 | -5 | 4,0 | 3,7 | 7 |
| 10 | 70 | 20 | -5 | 4,0 | 3,7 | 9 |

Mélange HFO-1234yf / HFO-1243zf / HFO-E-1336mzz :

| Composition (%) | | | Temp. (°C) | P sat. liquide | P sat. vapeur | Diff. pression (%) |
|---|---|---|---|---|---|---|
| HFO-1234yf | HFO-1243zf | HFO-E-1336mzz | | | | |
| 10 | 82 | 8 | -5 | 2,2 | 2,0 | 8 |
| 20 | 72 | 8 | -5 | 2,3 | 2,1 | 9 |
| 30 | 62 | 8 | -5 | 2,3 | 2,1 | 9 |
| 40 | 52 | 8 | -5 | 2,3 | 2,1 | 9 |
| 50 | 42 | 8 | -5 | 2,4 | 2,1 | 10 |
| 60 | 32 | 8 | -5 | 2,4 | 2,2 | 10 |
| 70 | 22 | 8 | -5 | 2,4 | 2,2 | 10 |
| 80 | 12 | 8 | -5 | 2,5 | 2,2 | 10 |

Mélange HC-290 / HFO-1234ze / HFO-E-1336mzz :

| Composition (%) | | | Temp. (°C) | P sat. liquide | P sat. vapeur | Diff. pression (%) |
|---|---|---|---|---|---|---|
| HC-290 | HFO-1234ze | HFO-E-1336mzz | | | | |
| 70 | 20 | 10 | -5 | 3,8 | 3,4 | 9 |
| 80 | 10 | 10 | -5 | 3,9 | 3,7 | 5 |
| 85 | 5 | 10 | -5 | 4,0 | 3,8 | 3 |
| 75 | 5 | 20 | -5 | 3,9 | 3,6 | 8 |

Mélange HFO-1234yf / HFC-152a / HFO-E-1336mzz :

| Composition (%) | | | Temp. (°C) | P sat. liquide | P sat. vapeur | Diff. pression (%) |
|---|---|---|---|---|---|---|
| HFO-1234yf | HFC-152a | HFO-E-1336mzz | | | | |
| 90 | 5 | 5 | -5 | 3 | 2 | 7 |
| 60 | 35 | 5 | -5 | 3 | 2 | 7 |
| 50 | 45 | 5 | -5 | 3 | 2 | 7 |
| 40 | 55 | 5 | -5 | 2 | 2 | 7 |
| 20 | 75 | 5 | -5 | 2 | 2 | 6 |
| 10 | 85 | 5 | -5 | 2 | 2 | 5 |
| 30 | 60 | 10 | -5 | 2 | 2 | 10 |
| 20 | 70 | 10 | -5 | 2 | 2 | 9 |
| 10 | 80 | 10 | -5 | 2 | 2 | 8 |
| 7 | 80 | 13 | -5 | 2 | 2 | 9 |
| 2 | 85 | 13 | -5 | 2 | 2 | 8 |

Mélange HFO-1234ze / HFC-152a / HFO-E-1336mzz :

| Composition (%) | | | Temp. (°C) | P sat. liquide | P sat. vapeur | Diff. pression (%) |
|---|---|---|---|---|---|---|
| HFO-1234ze | HFC-152a | HFO-E-1336mzz | | | | |
| 90 | 5 | 5 | -5 | 1,8 | 1,7 | 5 |
| 70 | 25 | 5 | -5 | 2,0 | 1,8 | 6 |
| 50 | 45 | 5 | -5 | 2,0 | 1,9 | 5 |
| 30 | 65 | 5 | -5 | 2,1 | 2,0 | 4 |
| 10 | 85 | 5 | -5 | 2,2 | 2,1 | 3 |
| 85 | 5 | 10 | -5 | 1,7 | 1,6 | 9 |
| 75 | 15 | 10 | -5 | 1,8 | 1,7 | 10 |
| 65 | 25 | 10 | -5 | 1,9 | 1,7 | 10 |
| 40 | 50 | 10 | -5 | 2,0 | 1,9 | 8 |
| 30 | 60 | 10 | -5 | 2,1 | 1,9 | 8 |
| 20 | 70 | 10 | -5 | 2,1 | 1,9 | 7 |

(suite)

| Composition (%) | | | Temp. (°C) | P sat. liquide | P sat. vapeur | Diff. pression (%) |
|---|---|---|---|---|---|---|
| HFO-1234ze | HFC-152a | HFO-E-1336mzz | | | | |
| 10 | 80 | 10 | -5 | 2,1 | 2,0 | 7 |
| 15 | 70 | 15 | -5 | 2,1 | 1,9 | 10 |
| 5 | 80 | 15 | -5 | 2,1 | 1,9 | 9 |

Exemple 3 - Résultats pour une réfrigération à température modérée, comparaison avec le HFO-1234ze

Mélange HFO-1234ze / HFO-E-1336mzz :

| Composition (%) | | Temp sortie évap (°C) | Temp sortie comp (°C) | T sortie cond (°C) | Temp entrée détend (°C) | evap P (bar) | cond P (bar) | Taux (p/p) | Glide | rendement comp | % CAP | %COP / COPLorenz |
|---|---|---|---|---|---|---|---|---|---|---|---|---|
| HFO-1234ze | | -5 | 63 | 50 | 47 | 1,8 | 10,0 | 5,6 | 0,00 | 74,8 | 100 | 53 |
| HFO-1234ze | HFO-E-1336mzz | | | | | | | | | | | |
| 95 | 5 | -4 | 62 | 49 | 47 | 1,7 | 9,6 | 5,6 | 0,94 | 75,1 | 99 | 53 |
| 85 | 15 | -3 | 61 | 48 | 45 | 1,6 | 8,8 | 5,5 | 2,43 | 75,4 | 95 | 54 |
| 75 | 25 | -2 | 60 | 47 | 44 | 1,5 | 8,1 | 5,5 | 3,49 | 75,5 | 90 | 55 |
| 65 | 35 | -1 | 59 | 46 | 43 | 1,3 | 7,4 | 5,5 | 4,16 | 75,4 | 85 | 55 |

Mélange HFC-134a/ HFO-E-1336mzz :

| Composition (%) | | Temp sortie évap (°C) | Temp sortie comp (°C) | T sortie cond (°C) | Temp entrée détend (°C) | evap P (bar) | cond P (bar) | Taux (p/p) | Glide | rendement comp | % CAP | %COP / COPLorenz |
|---|---|---|---|---|---|---|---|---|---|---|---|---|
| HFO-1234ze | | -5 | 63 | 50 | 47 | 1,8 | 10,0 | 5,6 | 0,00 | 74,8 | 100 | 53 |
| HFC-134a | HFO-E-1336mzz | | | | | | | | | | | |
| 95 | 5 | -4 | 70 | 49 | 47 | 2,4 | 12,6 | 5,3 | 1,24 | 76,3 | 137 | 55 |
| 85 | 15 | -1 | 68 | 47 | 45 | 2,2 | 11,4 | 5,2 | 3,58 | 76,9 | 132 | 57 |
| 75 | 25 | 1 | 66 | 45 | 43 | 2,0 | 10,3 | 5,0 | 5,53 | 77,5 | 127 | 58 |
| 65 | 35 | 2 | 64 | 43 | 41 | 1,9 | 9,2 | 5,0 | 7,01 | 77,9 | 120 | 59 |
| 55 | 45 | 3 | 61 | 42 | 39 | 1,7 | 8,2 | 4,9 | 7,91 | 78,0 | 112 | 60 |
| 45 | 55 | 3 | 59 | 41 | 38 | 1,5 | 7,3 | 5,0 | 8,14 | 77,7 | 101 | 60 |
| 35 | 65 | 3 | 58 | 40 | 38 | 1,3 | 6,5 | 5,2 | 7,59 | 76,9 | 89 | 60 |
| 25 | 75 | 1 | 56 | 41 | 38 | 1,0 | 5,8 | 5,6 | 6,14 | 75,0 | 74 | 58 |

Mélange HFC-134a / HFO-1234ze / HFO-E-1336mzz :

| Composition (%) | | | Temp sortie évap (°C) | Temp sortie comp (°C) | T sortie cond (°C) | Temp entrée détend (°C) | evap P (bar) | cond P (bar) | Taux (p/p) | Glide | rendement comp | % CAP | %COP / COPLorenz |
|---|---|---|---|---|---|---|---|---|---|---|---|---|---|
| HFO-1234ze | | | -5 | 63 | 50 | 47 | 1,8 | 10,0 | 5,6 | 0,00 | 74,8 | 100 | 53 |
| HFC-134a | HFO-1234ze | HFO-E-1336mzz | | | | | | | | | | | |
| 10 | 70 | 20 | -1 | 61 | 46 | 44 | 1,6 | 8,7 | 5,4 | 3,51 | 76,0 | 99 | 55 |
| 10 | 65 | 25 | -1 | 61 | 46 | 43 | 1,6 | 8,4 | 5,4 | 4,05 | 76,0 | 97 | 56 |
| 10 | 60 | 30 | -1 | 60 | 45 | 43 | 1,5 | 8,0 | 5,4 | 4,50 | 76,1 | 94 | 56 |
| 10 | 55 | 35 | 0 | 60 | 45 | 42 | 1,4 | 7,7 | 5,4 | 4,86 | 76,0 | 92 | 56 |
| 15 | 70 | 15 | -2 | 62 | 47 | 44 | 1,7 | 9,3 | 5,4 | 3,06 | 76,0 | 104 | 55 |
| 15 | 65 | 20 | -1 | 62 | 46 | 44 | 1,7 | 8,9 | 5,4 | 3,71 | 76,1 | 101 | 55 |
| 15 | 60 | 25 | -1 | 61 | 46 | 43 | 1,6 | 8,5 | 5,3 | 4,29 | 76,3 | 100 | 56 |
| 15 | 55 | 30 | 0 | 60 | 45 | 42 | 1,5 | 8,2 | 5,3 | 4,77 | 76,3 | 97 | 56 |
| 20 | 70 | 10 | -3 | 63 | 48 | 45 | 1,8 | 9,9 | 5,4 | 2,40 | 75,9 | 108 | 55 |
| 20 | 65 | 15 | -2 | 63 | 47 | 44 | 1,8 | 9,4 | 5,4 | 3,21 | 76,2 | 106 | 55 |
| 20 | 60 | 20 | -1 | 62 | 46 | 44 | 1,7 | 9,1 | 5,3 | 3,90 | 76,3 | 104 | 56 |
| 20 | 55 | 25 | 0 | 62 | 45 | 43 | 1,6 | 8,7 | 5,3 | 4,51 | 76,5 | 103 | 56 |
| 30 | 65 | 5 | -3 | 65 | 48 | 46 | 2,0 | 10,7 | 5,4 | 1,59 | 75,8 | 114 | 54 |

| | | | | | | | | | | | | | |
|---|---|---|---|---|---|---|---|---|---|---|---|---|---|
| 30 | 60 | 10 | -2 | 64 | 47 | 45 | 1,9 | 10,2 | 5,4 | 2,59 | 76,1 | 113 | 55 |
| 30 | 55 | 15 | -2 | 63 | 47 | 44 | 1,8 | 9,8 | 5,3 | 3,45 | 76,4 | 111 | 56 |
| 40 | 55 | 5 | -3 | 65 | 48 | 46 | 2,0 | 11,0 | 5,4 | 1,65 | 75,9 | 118 | 55 |
| 40 | 50 | 10 | -2 | 65 | 47 | 45 | 2,0 | 10,5 | 5,3 | 2,70 | 76,3 | 117 | 55 |
| 40 | 45 | 15 | -1 | 64 | 47 | 44 | 1,9 | 10,1 | 5,3 | 3,61 | 76,6 | 116 | 56 |

Mélange HFC-134a / HFO-1234yf / HFO-E-1336mzz :

| Composition (%) | | | Temp sortie évap (°C) | Temp sortie comp (°C) | T sortie cond (°C) | Temp entrée détend (°C) | evap P (bar) | cond P (bar) | Taux (p/p) | Glide | rendement comp | % CAP | %COP / COPLorenz |
|---|---|---|---|---|---|---|---|---|---|---|---|---|---|
| HFO-1234ze | | | -5 | 63 | 50 | 47 | 1,8 | 10,0 | 5,6 | 0,00 | 74,8 | 100 | 53 |
| HFO-1234yf | HFC-134a | HFO-E-1336mzz | | | | | | | | | | | |
| 60 | 10 | 30 | 3 | 58 | 44 | 41 | 2,0 | 9,4 | 4,6 | 7,55 | 79,1 | 120 | 58 |
| 55 | 10 | 35 | 3 | 58 | 43 | 40 | 1,9 | 8,9 | 4,6 | 8,14 | 79,2 | 117 | 59 |
| 50 | 10 | 40 | 4 | 57 | 42 | 39 | 1,8 | 8,4 | 4,6 | 8,56 | 79,1 | 113 | 59 |
| 45 | 10 | 45 | 4 | 57 | 41 | 38 | 1,7 | 7,9 | 4,7 | 8,80 | 79,0 | 108 | 59 |
| 60 | 15 | 25 | 2 | 59 | 44 | 42 | 2,2 | 10,0 | 4,6 | 6,86 | 79,1 | 124 | 57 |
| 55 | 15 | 30 | 3 | 59 | 44 | 41 | 2,0 | 9,4 | 4,6 | 7,63 | 79,2 | 121 | 58 |
| 50 | 15 | 35 | 3 | 58 | 43 | 40 | 1,9 | 8,9 | 4,6 | 8,21 | 79,2 | 118 | 59 |
| 45 | 15 | 40 | 4 | 58 | 42 | 39 | 1,8 | 8,4 | 4,6 | 8,62 | 79,1 | 114 | 59 |
| 55 | 20 | 25 | 2 | 60 | 44 | 42 | 2,2 | 10,0 | 4,6 | 6,91 | 79,1 | 126 | 57 |
| 50 | 20 | 30 | 3 | 59 | 43 | 41 | 2,1 | 9,5 | 4,6 | 7,67 | 79,1 | 123 | 58 |
| 45 | 20 | 35 | 3 | 59 | 43 | 40 | 1,9 | 9,0 | 4,6 | 8,25 | 79,2 | 119 | 59 |
| 40 | 20 | 40 | 4 | 58 | 42 | 39 | 1,8 | 8,5 | 4,6 | 8,65 | 79,1 | 115 | 59 |
| 60 | 30 | 10 | -1 | 62 | 48 | 45 | 2,5 | 11,9 | 4,8 | 3,53 | 78,6 | 134 | 55 |
| 55 | 30 | 15 | 0 | 61 | 46 | 44 | 2,4 | 11,3 | 4,7 | 4,87 | 78,8 | 132 | 56 |
| 50 | 30 | 20 | 1 | 61 | 45 | 43 | 2,3 | 10,7 | 4,7 | 5,98 | 78,9 | 130 | 57 |
| 45 | 30 | 25 | 2 | 61 | 44 | 42 | 2,2 | 10,1 | 4,7 | 6,90 | 79,0 | 127 | 58 |
| 55 | 40 | 5 | -3 | 63 | 49 | 46 | 2,6 | 12,7 | 4,9 | 1,93 | 78,2 | 136 | 54 |
| 50 | 40 | 10 | -2 | 63 | 48 | 45 | 2,5 | 12,0 | 4,8 | 3,49 | 78,4 | 135 | 55 |
| 45 | 40 | 15 | 0 | 62 | 47 | 44 | 2,4 | 11,4 | 4,8 | 4,80 | 78,6 | 133 | 56 |

**Revendications**

1. Composition comprenant du (E)-1,1,1,4,4,4-hexafluorobut-2-ène en mélange avec au moins un composé hydrocarbure, hydrofluorocarbure, éther, hydrofludroéther ou fluorooléfine présentant un point d'ébullition inférieur ou égal à -12°C à la pression de 101,325 KPa.

2. Composition selon la revendication 1, dans laquelle le composé est choisi parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane, le propane, le diméthyléther et les mélanges de ceux-ci.

3. Composition selon la revendication 1 ou 2, consistant en un mélange de:

- (E)-1,1,1,4,4,4-hexafluorobut-2-ène et un composé choisi parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane et le propane ; ou
- (E)-1,1,1,4,4,4-hexafluorobut-2-ène et deux composés choisis parmi le 1,3,3,3-tétrafluoropropène, le 2,3,3,3-tétrafluoropropène, le 3,3,3-trifluoropropène, le 1,1,1,2-tétrafluoroéthane, le 1,1-difluoroéthane, le difluorométhane, le pentafluoroéthane, le propane et l'isobutane.

**4.** Composition selon l'une des revendications 1 à 3, comprenant et de préférence consistant en un mélange de :

- (E)-1,1,1,4,4,4-hexafluorobut-2-ène et 1,3,3,3-tétrafluoropropène ;
- (E)-1,1,1,4,4,4-hexafluorobut-2-ène et 2,3,3,3-tétrafluoropropène ;
- (E)-1,1,1,4,4,4-hexafluorobut-2-ène et 3,3,3-trifluoropropène ;
- (E)-1,1,1,4,4,4-hexafluorobut-2-ène et 1,1,1,2-tétrafluoroéthane ;
- (E)-1,1,1,4,4,4-hexafluorobut-2-ène et 1,1-difluoroéthane ;
- (E)-1,1,1,4,4,4-hexafluorobut-2-ène et difluorométhane ;
- (E)-1,1,1,4,4,4-hexafluorobut-2-ène et propane ;
- (E)-1,1,1,4,4,4-hexafluorobut-2-ène, 1,1,1,2-tétrafluoroéthane et 1,3,3,3-tétrafluoropropène ;
- (E)-1,1,1,4,4,4-hexafluorobut-2-ène, 1,1,1,2-tétrafluoroéthane et 2,3,3,3-tétrafluoropropène ;
- (E)-1,1,1,4,4,4-hexafluorobut-2-ène, 1,1,1,2-tétrafluoroéthane et 1,1-difluoroéthane ;
- (E)-1,1,1,4,4,4-hexafluorobut-2-ène, 1,1,1,2-tétrafluoroéthane et 3,3,3-trifluoropropène ;
- (E)-1,1,1,4,4,4-hexafluorobut-2-ène, 1,1,1,2-tétrafluoroéthane et isobutane ;
- ( E)-1,1,1,4,4,4-hexafluorobut-2-ène, 1,1,1,2-tétrafluoroéthane et propane ;
- (E)-1,1,1,4,4,4-hexafluorobut-2-ène, isobutane et 1,3,3,3-tétrafluoropropène ;
- (E)-1,1,1,4,4,4-hexafluorobut-2-ène, isobutane et 2,3,3,3-tétrafluoropropène ;
- (E)-1,1,1,4,4,4-hexafluorobut-2-ène, isobutane et 1,1-difluoroéthane ;
- (E)-1,1,1,4,4,4-hexafluorobut-2-ène, isobutane et propane ;
- (E)-1,1,1,4,4,4-hexafluorobut-2-ène, 3,3,3-trifluoropropène et 2,3,3,3-tétrafluoropropène ;
- (E)-1,1,1,4,4,4-hexafluorobut-2-ène, 3,3,3-trifluoropropène et 1,3,3,3-tétrafluoropropène ;
- (E)-1,1,1,4,4,4-hexafluorobut-2-ène, 3,3,3-trifluoropropène et isobutane ;
- (E)-1,1,1,4,4,4-hexafluorobut-2-ène, 3,3,3-trifluoropropène et 1,1-difluoroéthane ;
- (E)-1,1,1,4,4,4-hexafluorobut-2-ène, 3,3,3-trifluoropropène et propane ;
- (E)-1,1,1,4,4,4-hexafluorobut-2-ène, 1,3,3,3-tétrafluoropropène et 2,3,3,3-tétrafluoropropène ;
- (E)-1,1,1,4,4,4-hexafluorobut-2-ène, 1,3,3,3-tétrafluoropropène et propane ;
- (E)-1,1,1,4,4,4-hexafluorobut-2-ène, 1,3,3,3-tétrafluoropropène et 1,1-difluoroéthane ;
- (E)-1,1,1,4,4,4-hexafluorobut-2-ène, 2,3,3,3-tétrafluoropropène et propane ;
- (E)-1,1,1,4,4,4-hexafluorobut-2-ène, 2,3,3,3-tétrafluoropropène et 1,1-difluoroéthane ;
- (E)-1,1,1,4,4,4-hexafluorobut-2-ène, 1,1-difluoroéthane et propane ;
- (E)-1,1,1,4,4,4-hexafluorobut-2-ène, pentafluoroéthane et 1,3,3,3-tétrafluoropropène ;
- (E)-1,1,1,4,4,4-hexafluorobut-2-ène, pentafluoroéthane et 2,3,3,3-tétrafluoropropène ;
- (E)-1,1,1,4,4,4-hexafluorobut-2-ène, pentafluoroéthane et 3,3,3-trifluoropropène ;
- (E)-1,1,1,4,4,4-hexafluorobut-2-ène, pentafluoroéthane et 1,1-difluoroéthane ;
- (E)-1,1,1,4,4,4-hexafluorobut-2-ène, pentafluoroéthane et difluorométhane ;
- (E)-1,1,1,4,4,4-hexafluorobut-2-ène, pentafluoroéthane et 1,1,1,2-tétrafluoroéthane.

**5.** Composition selon l'une des revendications 1 à 4, dont la différence entre la pression de saturation liquide et la pression de saturation vapeur à une température de -5°C est inférieure ou égale à 10 % de la pression de saturation liquide, et qui de préférence comprend ou consiste en :

- de 1 à 8 % de (E)-1,1,1,4,4,4-hexafluorobut-2-ène et de 92 à 99 % de 2,3,3,3-tétrafluoropropène ; ou
- de 1 à 12 % de (E)-1,1,1,4,4,4-hexafluorobut-2-ène et de 88 à 99 % de 1,3,3,3-tétrafluoropropène ; ou
- de 1 à 9 % de (E)-1,1,1,4,4,4-hexafluorobut-2-ène et de 91 à 99 % de 1,1,1,2-tétrafluoroéthane ; ou
- de 1 à 6 % de (E)-1,1,1,4,4,4-hexafluorobut-2-ène et de 94 à 99 % de difluorométhane ; ou
- de 1 à 17 % de (E)-1,1,1,4,4,4-hexafluorobut-2-ène et de 83 à 99 % de 1,1-difluoroéthane ; ou
- de 1 à 26 % de (E)-1,1,1,4,4,4-hexafluorobut-2-ène et de 74 à 99 % de propane ; ou
- de 1 à 10 % de (E)-1,1,1,4,4,4-hexafluorobut-2-ène et de 90 à 99 % de 3,3,3-trifluoropropène ; ou
- de 1 à 10 % de (E)-1,1,1,4,4,4-hexafluorobut-2-ène, de 1 à 98 % de 1,1,1,2-tétrafluoroéthane et de 1 à 98 % de 1,3,3,3-tétrafluoropropène ; ou
- de 1 à 8 % de (E)-1,1,1,4,4,4-hexafluorobut-2-ène, de 1 à 98 % de 1,1,1,2-tétrafluoroéthane et de 1 à 98 % de 2,3,3,3-tétrafluoropropène ; ou

- de 1 à 15 % de (E)-1,1,1,4,4,4-hexafluorobut-2-ène, de 1 à 98 % de 1,1,1,2-tétrafluoroéthane et de 1 à 98 % de 1,1-difluoroéthane ; ou
- de 1 à 8 % de (E)-1,1,1,4,4,4-hexafluorobut-2-ène, de 1 à 98 % de 2,3,3,3-tétrafluoropropène et de 1 à 98 % de 3,3,3-trifluoropropène ; ou
- de 1 à 8 % de (E)-1,1,1,4,4,4-hexafluorobut-2-ène, de 1 à 98 % de 1,1,1,2-tétraffuoroéthane et de 1 à 98 % de 3,3,3-trifluoropropène ; ou
- de 1 à 8 % de (E)-1,1,1,4,4,4-hexafluorobut-2-ène, de 1 à 98 % de 2,3,3,3-tétrafluoropropène et de 1 à 98 % de 1,3,3,3-tétrafluoropropène ; ou
- de 1 à 20 % de (E)-1,1,1,4,4,4-hexafluorobut-2-ène, de 1 à 30 % de 1,1,1,2-tétrafluoroéthane et de 50 à 98 % de propane ; ou
- de 1 à 20 % de (E)-1,1,1,4,4,4-hexafluorobut-2-ène, de 1 à 98 % de 2,3,3,3-tétrafluoropropène et de 1 à 98 % de propane ; ou
- de 1 à 13 % de (E)-1,1,1,4,4,4-hexafluorobut-2-ène, de 1 à 98 % de 2,3,3,3-tétrafluoropropène et de 1 à 98 % de 1,1-difluoroéthane ; ou
- de 1 à 15 % de (E)-1,1,1;4,4,4-hexafluorobut-2-ène, de 1 à 98 % de 1,3,3,3-tétrafluoropropène et de 1 à 98 % de 1,1-difluoroéthane ; ou
- de 1 à 20 % de (E)-1,1,1,4,4,4-hexafluorobut-2-ène, de 1 à 98 % de 1,3,3,3-tétrafluoropropène et de 1 à 98 % de propane.

6. Composition selon l'une des revendications 1 à 5, comprenant et de préférence consistant en :

- de 10 à 50 % de (E)-1,1,1,4,4,4-hexafluorobut-2-ène et de 50 à 90 % de 1,3,3,3-tétrafluoropropène, de préférence de 30 à 40 % de (E)-1,1,1,4,4,4-hexafluorobut-2-ène et de 60 à 70 % de 1,3,3,3-tétrafluoropropène ; ou
- de 55 à 95 % de (E)-1,1,1,4,4,4-hexafluorobut-2-ène et de 5 à 45 % de 1,1,1,2-tétrafluoroéthane ; ou
- de 1 à 98 % de (E)-1,1,1,4,4,4-hexafluorobut-2-ène, de 1 à 98 % de 2,3,3,3-tétrafluoropropène et de 1 à 50 % de 1,1,1,2-tétrafluoroéthane, de préférence de 2 à 60 % de (E)-1,1,1,4,4,4-hexafluorobut-2-ène, de 2 à 93 % de 2,3,3,3-tétrafluoropropène et de 5 à 50 % de 1,1,1,2-tétrafluoroéthane et de manière plus particulièrement préférée de 5 à 45 % de (E)-1,1,1,4,4,4-hexafluorobut-2-ène, de 11 à 86 % de 2,3,3,3-tétrafluoropropène et de 9 à 44 % de 1,1,1,2-tétrafluoroéthane ; ou
- de 1 à 98 % de (E)-1,1,1,4,4,4-hexafluorobut-2-ène, de 1 à 98 % de 1,3,3,3-tétrafluoropropène et de 1 à 40 % de 1,1,1,2-tétrafluoroéthane, de préférence de 2 à 40 % de (E)-1,1,1,4,4,4-hexafluorobut-2-ène, de 20 à 93 % de 1,3,3,3-tétrafluoropropène et de 5 à 40 % de 1,1,1,2-tétrafluoroéthane et de manière plus particulièrement préférée de 2 à 35 % de (E)-1,1,1,4,4,4-hexafluorobut-2-ène, de 33 à 89 % de 1,3,3,3-tétrafluoropropène et de 9 à 32 % de 1,1,1,2-tétrafluoroéthane.

7. Utilisation de la composition selon l'une des revendications 1 à 6, en tant que fluide de transfert de chaleur.

8. Composition de transfert de chaleur, comprenant la composition selon l'une des revendications 1 à 6 ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

9. Installation de transfert de chaleur comprenant un circuit de compression de vapeur contenant une composition selon l'une des revendications 1 à 6 en tant que fluide de transfert de chaleur ou contenant une composition de transfert de chaleur selon la revendication 8.

10. Installation selon la revendication 9, choisie parmi les installations mobiles ou stationnaires de chauffage par pompe à chaleur, de climatisation, de réfrigération, de congélation et les cycles de Rankine.

11. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 6.

12. Procédé selon la revendication 11, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

13. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 6.

**Patentansprüche**

1. Zusammensetzung, umfassend (E)-1,1,1,4,4,4-Hexa-fluorbut-2-en in Abmischung mit mindestens einer Kohlenwasserstoff-, teilfluorierten Kohlenwasserstoff-, Ether-, Hydrofluorether- oder Fluorolefin-Verbindung mit einem Siedepunkt kleiner gleich -12°C bei einem Druck von 101.325 kPa.

2. Zusammensetzung nach Anspruch 1, wobei die Verbindung aus 1,3,3,3-Tetrafluorpropen, 2,3,3,3-Tetrafluoropropen, 3,3,3-Trifluorpropen, 1,1,1,2-Tetrafluorethan, 1,1-Difluorethan, Difluormethan, Pentafluorethan, Propan, Dimethylether und Mischungen davon ausgewählt ist.

3. Zusammensetzung nach Anspruch 1 oder 2, bestehend aus einer Mischung von:

   - (E)-1,1,1,4,4,4-Hexafluorbut-2-en und einer aus 1,3,3,3-Tetrafluorpropen, 2,3,3,3-Tetrafluorpropen, 3,3,3-Trifluorpropen, 1,1,1,2-Tetrafluorethan, 1,1-Difluorethan, Difluormethan, Pentafluorethan und Propan ausgewählten Verbindung; oder
   - (E)-1,1,1,4,4,4-Hexafluorbut-2-en und zwei aus 1,3,3,3-Tetrafluorpropen, 2,3,3,3-Tetrafluorpropen, 3,3,3-Trifluorpropen, 1,1,1,2-Tetrafluorethan, 1,1-Difluorethan, Difluormethan, Pentafluorethan, Propan und Isobutan ausgewählten Verbindungen.

4. Zusammensetzung nach einem der Ansprüche 1 bis 3, umfassend und vorzugsweise bestehend aus einer Mischung von:

   - (E)-1,1,1,4,4,4-Hexafluorbut-2-en und 1,3,3,3-Tetrafluorpropen;
   - (E)-1,1,1,4,4,4-Hexafluorbut-2-en und 2,3,3,3-Tetrafluorpropen;
   - (E)-1,1,1,4,4,4-Hexafluorbut-2-en und 3,3,3-Trifluorpropen;
   - (E)-1,1,1,4,4,4-Hexafluorbut-2-en und 1,1,1,2-Tetrafluorethan;
   - (E)-1,1,1,4,4,4-Hexafluorbut-2-en und 1,1-Difluorethan;
   - (E)-1,1,1,4,4,4-Hexafluorbut-2-en und Difluormethan;
   - (E)-1,1,1,4,4,4-Hexafluorbut-2-en und Propan;
   - (E)-1,1,1,4,4,4-Hexafluorbut-2-en, 1,1,1,2-Tetrafluorethan und 1,3,3,3-Tetrafluorpropen;
   - (E)-1,1,1,4,4,4-Hexafluorbut-2-en, 1,1,1,2-Tetrafluorethan und 2,3,3,3-Tetrafluorpropen;
   - (E)-1,1,1,4,4,4-Hexafluorbut-2-en, 1,1,1,2-Tetrafluorethan und 1,1-Difluorethan;
   - (E)-1,1,1,4,4,4-Hexafluorbut-2-en, 1,1,1,2-Tetrafluorethan und 3,3,3-Trifluorpropen;
   - (E)-1,1,1,4,4,4-Hexafluorbut-2-en, 1,1,1,2-Tetrafluorethan und Isobutan;
   - (E)-1,1,1,4,4,4-Hexafluorbut-2-en, 1,1,1,2-Tetrafluorethan und Propan;
   - (E)-1,1,1,4,4,4-Hexafluorbut-2-en, Isobutan und 1,3,3,3-Tetrafluorpropen;
   - (E)-1,1,1,4,4,4-Hexafluorbut-2-en, Isobutan und 2,3,3,3-Tetrafluorpropen;
   - (E)-1,1,1,4,4,4-Hexafluorbut-2-en, Isobutan und 1,1-Difluorethan;
   - (E)-1,1,1,4,4,4-Hexafluorbut-2-en, Isobutan und Propan;
   - (E)-1,1,1,4,4,4-Hexafluorbut-2-en, 3,3,3-Trifluorpropen und 2,3,3,3-Tetrafluorpropen;
   - (E)-1,1,1,4,4,4-Hexafluorbut-2-en, 3,3,3-Trifluorpropen und 1,3,3,3-Tetrafluorpropen;
   - (E)-1,1,1,4,4,4-Hexafluorbut-2-en, 3,3,3-Trifluorpropen und Isobutan;
   - (E)-1,1,1,4,4,4-Hexafluorbut-2-en, 3,3,3-Trifluorpropen und 1,1-Difluorethan;
   - (E)-1,1,1,4,4,4-Hexafluorbut-2-en, 3,3,3-Trifluorpropen und Propan;
   - (E)-1,1,1,4,4,4-Hexafluorbut-2-en, 1,3,3,3-Tetrafluorpropen und 2,3,3,3-Tetrafluorpropen;
   - (E)-1,1,1,4,4,4-Hexafluorbut-2-en, 1,3,3,3-Tetrafluorpropen und Propan;
   - (E)-1,1,1,4,4,4-Hexafluorbut-2-en, 1,3,3,3-Tetrafluorpropen und 1,1-Difluorethan;
   - (E)-1,1,1,4,4,4-Hexafluorbut-2-en, 2,3,3,3-Tetrafluorpropen und Propan;

- (E)-1,1,1,4,4,4-Hexafluorbut-2-en, 2,3,3,3-Tetrafluorpropen und 1,1-Difluorethan;
- (E)-1,1,1,4,4,4-Hexafluorbut-2-en, 1,1-Difluorethan und Propan;
- (E)-1,1,1,4,4,4-Hexafluorbut-2-en, Pentafluorethan und 1,3,3,3-Tetrafluorpropen;
- (E)-1,1,1,4,4,4-Hexafluorbut-2-en, Pentafluorethan und 2,3,3,3-Tetrafluorpropen;
- (E)-1,1,1,4,4,4-Hexafluorbut-2-en, Pentafluorethan und 3,3,3-Trifluorpropen;
- (E)-1,1,1,4,4,4-Hexafluorbut-2-en, Pentafluorethan und 1,1-Difluorethan;
- (E)-1,1,1,4,4,4-Hexafluorbut-2-en, Pentafluorethan und Difluormethan;
- (E)-1,1,1,4,4,4-Hexafluorbut-2-en, Pentafluorethan und 1,1,1,2-Tetrafluorethan.

5. Zusammensetzung nach einem der Ansprüche 1 bis 4, deren Differenz zwischen dem Flüssigkeitssättigungsdruck und dem Dampfsättigungsdruck bei einer Temperatur von -5°C kleiner gleich 10% des Flüssigkeitssättigungsdrucks ist und die vorzugsweise:

- 1 bis 8% (E)-1,1,1,4,4,4-Hexafluorbut-2-en und 92 bis 99% 2,3,3,3-Tetrafluorpropen; oder
- 1 bis 12% (E)-1,1,1,4,4,4-Hexafluorbut-2-en und 88 bis 99% 1,3,3,3-Tetrafluorpropen; oder
- 1 bis 9% (E)-1,1,1,4,4,4-Hexafluorbut-2-en und 91 bis 99% 1,1,1,2-Tetrafluorethan; oder
- 1 bis 6% (E)-1,1,1,4,4,4-Hexafluorbut-2-en und 94 bis 99% Difluormethan; oder
- 1 bis 17% (E)-1,1,1,4,4,4-Hexafluorbut-2-en und 83 bis 99% 1,1-Difluorethan; oder
- 1 bis 26% (E)-1,1,1,4,4,4-Hexafluorbut-2-en und 74 bis 99% Propan; oder
- 1 bis 10% (E)-1,1,1,4,4,4-Hexafluorbut-2-en und 90 bis 99% 3,3,3-Trifluorpropen; oder
- 1 bis 10% (E)-1,1,1,4,4,4-Hexafluorbut-2-en, 1 bis 98% 1,1,1,2-Tetrafluorethan und 1 bis 98% 1,3,3,3-Tetrafluorpropen; oder
- 1 bis 8% (E)-1,1,1,4,4,4-Hexafluorbut-2-en, 1 bis 98% 1,1,1,2-Tetrafluorethan und 1 bis 98% 2,3,3,3-Tetrafluorpropen; oder
- 1 bis 15% (E)-1,1,1,4,4,4-Hexafluorbut-2-en, 1 bis 98% 1,1,1,2-Tetrafluorethan und 1 bis 98% 1,1-Difluorethan; oder
- 1 bis 8% (E)-1,1,1,4,4,4-Hexafluorbut-2-en, 1 bis 98% 2,3,3,3-Tetrafluorpropen und 1 bis 98% 3,3,3-Trifluorpropen; oder
- 1 bis 8% (E)-1,1,1,4,4,4-Hexafluorbut-2-en, 1 bis 98% 1,1,1,2-Tetrafluorethan und 1 bis 98% 3,3,3-Trifluorpropen; oder
- 1 bis 8% (E)-1,1,1,4,4,4-Hexafluorbut-2-en, 1 bis 98% 2,3,3,3-Tetrafluorpropen und 1 bis 98% 1,3,3,3-Tetrafluorpropen; oder
- 1 bis 20% (E)-1,1,1,4,4,4-Hexafluorbut-2-en, 1 bis 30% 1,1,1,2-Tetrafluorethan und 50 bis 98% Propan; oder
- 1 bis 20% (E)-1,1,1,4,4,4-Hexafluorbut-2-en, 1 bis 98% 2,3,3,3-Tetrafluorpropen und 1 bis 98% Propan; oder
- 1 bis 13% (E)-1,1,1,4,4,4-Hexafluorbut-2-en, 1 bis 98% 2,3,3,3-Tetrafluorpropen und 1 bis 98% 1,1-Difluorethan; oder
- 1 bis 15% (E)-1,1,1,4,4,4-Hexafluorbut-2-en, 1 bis 98% 1,3,3,3-Tetrafluorpropen und 1 bis 98% 1,1-Difluorethan; oder
- 1 bis 20% (E)-1,1,1,4,4,4-Hexafluorbut-2-en, 1 bis 98% 1,3,3,3-Tetrafluorpropen und 1 bis 98% Propan

umfasst oder daraus besteht.

6. Zusammensetzung nach Anspruch 1 bis 5, umfassend und vorzugsweise bestehend aus:

- 10 bis 50% (E)-1,1,1,4,4,4-Hexafluorbut-2-en und 50 bis 90% 1,3,3,3-Tetrafluorpropen, vorzugsweise 30 bis 40% (E)-1,1,1,4,4,4-Hexafluorbut-2-en und 60 bis 70% 1,3,3,3-Tetrafluorpropen; oder
- 55 bis 95% (E)-1,1,1,4,4,4-Hexafluorbut-2-en und 5 bis 45% 1,1,1,2-Tetrafluorethan; oder
- 1 bis 98% (E)-1,1,1,4,4,4-Hexafluorbut-2-en, 1 bis 98% 2,3,3,3-Tetrafluorpropen und 1 bis 50% 1,1,1,2-Tetrafluorethan, vorzugsweise 2 bis 60% (E)-1,1,1,4,4,4-Hexafluorbut-2-en, 2 bis 93% 2,3,3,3-Tetrafluorpropen und 5 bis 50% 1,1,1,2-Tetrafluorethan und weiter bevorzugt 5 bis 45% (E)-1,1,1,4,4,4-Hexafluorbut-2-en, 11 bis 86% 2,3,3,3-Tetrafluorpropen und 9 bis 44% 1,1,1,2-Tetrafluorethan; oder
- 1 bis 98% (E)-1,1,1,4,4,4-Hexafluorbut-2-en, 1 bis 98% 1,3,3,3-Tetrafluorpropen und 1 bis 40% 1,1,1,2-Tetrafluorethan, vorzugsweise 2 bis 40% (E)-1,1,1,4,4,4-Hexafluorbut-2-en, 20 bis 93% 1,3,3,3-Tetrafluorpropen und 5 bis 40% 1,1,1,2-Tetrafluorethan und weiter bevorzugt 2 bis 35% (E)-1,1,1,4,4,4-Hexafluorbut-2-en, 33 bis 89% 1,3,3,3-Tetrafluorpropen und 9 bis 32% 1,1,1,2-Tetrafluorethan.

7. Verwendung der Zusammensetzung nach einem der Ansprüche 1 bis 6 als Wärmeübertragungsfluid.

8. Wärmeübertragungszusammensetzung, umfassend die Zusammensetzung nach einem der Ansprüche 1 bis 6 sowie ein oder mehrere aus Schmiermitteln, Stabilisatoren, Tensiden, Tracern, Fluoreszenzmitteln, Geruchsmitteln, Solubilisatoren und Mischungen davon ausgewählte Additive.

9. Wärmeübertragungsanlage, umfassend einen Dampfverdichtungskreislauf, der eine Zusammensetzung nach einem der Ansprüche 1 bis 6 als Wärmeübertragungsfluid enthält oder eine Wärmeübertragungszusammensetzung nach Anspruch 8 enthält.

10. Anlage nach Anspruch 9, ausgewählt aus mobilen oder stationären Wärmepumpenheizanlagen, Klimaanlagen, Kühlanlagen, Gefrieranlagen und Rankine-Zyklen.

11. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmeübertragungsfluid kondensiert und das Wärmeübertragungsfluid entspannt, wobei sich bei dem Wärmeübertragungsfluid um eine Zusammensetzung nach einem der Ansprüche 1 bis 6 handelt.

12. Verfahren nach Anspruch 11, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei denen es sich um ein Verfahren zum Erwärmen eines Fluids oder eines Körpers handelt, bei dem die Temperatur des erwärmten Fluids oder Körpers 30°C bis 90°C, vorzugsweise 35°C bis 60°C und weiter bevorzugt 40°C bis 50°C beträgt.

13. Verfahren zur Verringerung der Umweltbelastung einer Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Wärmeübertragungsfluid aufweist, wobei sich bei dem letztendlichen Wärmeübertragungsfluid um eine Zusammensetzung nach einem der Ansprüche 1 bis 6 handelt.

## Claims

1. Composition comprising (E)-1,1,1,4,4,4-hexafluorobut-2-ene as a mixture with at least one hydrocarbon, hydrofluorocarbon, ether, hydrofluoroether or fluoroolefin compound having a boiling point less than or equal to -12°C at a pressure of 101.325 KPa.

2. Composition according to Claim 1, wherein the compound is chosen from 1,3,3,3-tetrafluoropropene, 2,3,3,3-tetrafluoropropene, 3,3,3-trifluoropropene, 1,1,1,2-tetrafluoroethane, 1,1-difluoroethane, difluoromethane, pentafluoroethane, propane and dimethyl ether, and mixtures thereof.

3. Composition according to Claim 1 or 2, consisting of a mixture of:

   - (E)-1,1,1,4,4,4-hexafluorobut-2-ene and a compound chosen from 1,3,3,3-tetrafluoropropene, 2,3,3,3-tetrafluoropropene, 3,3,3-trifluoropropene, 1,1,1,2-tetrafluoroethane, 1,1-difluoroethane, difluoromethane, pentafluoroethane and propane; or
   - (E)-1,1,1,4,4,4-hexafluorobut-2-ene and two compounds chosen from 1,3,3,3-tetrafluoropropene, 2,3,3,3-tetrafluoropropene, 3,3,3-trifluoropropene, 1,1,1,2-tetrafluoroethane, 1,1-difluoroethane, difluoromethane, pentafluoroethane, propane and isobutane.

4. Composition according to one of Claims 1 to 3, comprising and preferably consisting of a mixture of:

   - (E)-1,1,1,4,4,4-hexafluorobut-2-ene and 1,3,3,3-tetrafluoropropene;
   - (E)-1,1,1,4,4,4-hexafluorobut-2-ene and 2,3,3,3-tetrafluoropropene;
   - (E)-1,1,1,4,4,4-hexafluorobut-2-ene and 3,3,3-trifluoropropene;
   - (E)-1,1,1,4,4,4-hexafluorobut-2-ene and 1,1,1,2-tetrafluoroethane;
   - (E)-1,1,1,4,4,4-hexafluorobut-2-ene and 1,1-difluoroethane;
   - (E)-1,1,1,4,4,4-hexafluorobut-2-ene and difluoromethane;
   - (E)-1,1,1,4,4,4-hexafluorobut-2-ene and propane;

- (E)-1,1,1,4,4,4-hexafluorobut-2-ene, 1,1,1,2-tetrafluoroethane and 1,3,3,3-tetrafluoropropene;
- (E) -1, 1, 1, 4, 4, 4-hexafluorobut-2-ene, 1,1,1,2-tetrafluoroethane and 2,3,3,3-tetrafluoropropene;
- (E)-1,1,1,4,4,4-hexafluorobut-2-ene, 1,1,1,2-tetrafluoroethane and 1,1-difluoroethane;
- (E)-1,1,1,4,4,4-hexafluorobut-2-ene, 1,1,1,2-tetrafluoroethane and 3,3,3-trifluoropropene;
- (E)-1,1,1,4,4,4-hexafluorobut-2-ene, 1,1,1,2-tetrafluoroethane and isobutane;
- (E)-1,1,1,4,4,4-hexafluorobut-2-ene, 1,1,1,2-tetrafluoroethane and propane;
- (E)-1,1,1,4,4,4-hexafluorobut-2-ene, isobutane and 1,3,3,3-tetrafluoropropene;
- (E)-1,1,1,4,4,4-hexafluorobut-2-ene, isobutane and 2,3,3,3-tetrafluoropropene;
- (E)-1,1,1,4,4,4-hexafluorobut-2-ene, isobutane and 1,1-difluoroethane;
- (E)-1,1,1,4,4,4-hexafluorobut-2-ene, isobutane and propane;
- (E)-1,1,1,4,4,4-hexafluorobut-2-ene, 3,3,3-trifluoropropene and 2,3,3,3-tetrafluoropropene;
- (E)-1,1,1,4,4,4-hexafluorobut-2-ene, 3,3,3-trifluoropropene and 1,3,3,3-tetrafluoropropene;
- (E)-1,1,1,4,4,4-hexafluorobut-2-ene, 3,3,3-trifluoropropene and isobutane;
- (E)-1,1,1,4,4,4-hexafluorobut-2-ene, 3,3,3-trifluoropropene and 1,1-difluoroethane;
- (E)-1,1,1,4,4,4-hexafluorobut-2-ene, 3,3,3-trifluoropropene and propane;
- (E)-1,1,1,4,4,4-hexafluorobut-2-ene, 1,3,3,3-tetrafluoropropene and 2,3,3,3-tetrafluoropropene;
- (E)-1,1,1,4,4,4-hexafluorobut-2-ene, 1,3,3,3-tetrafluoropropene and propane;
- (E)-1,1,1,4,4,4-hexafluorobut-2-ene, 1,3,3,3-tetrafluoropropene and 1,1-difluoroethane;
- (E)-1,1,1,4,4,4-hexafluorobut-2-ene, 2,3,3,3-tetrafluoropropene and propane;
- (E)-1,1,1,4,4,4-hexafluorobut-2-ene, 2,3,3,3-tetrafluoropropene and 1,1-difluoroethane;
- (E)-1,1,1,4,4,4-hexafluorobut-2-ene, 1,1-difluoroethane and propane;
- (E)-1,1,1,4,4,4-hexafluorobut-2-ene, pentafluoroethane and 1,3,3,3-tetrafluoropropene;
- (E)-1,1,1,4,4,4-hexafluorobut-2-ene, pentafluoroethane and 2,3,3,3-tetrafluoropropene;
- (E)-1,1,1,4,4,4-hexafluorobut-2-ene, pentafluoroethane and 3,3,3-trifluoropropene;
- (E)-1,1,1,4,4,4-hexafluorobut-2-ene, pentafluoroethane and 1,1-difluoroethane;
- (E)-1,1,1,4,4,4-hexafluorobut-2-ene, pentafluoroethane and difluoromethane;
- (E)-1,1,1,4,4,4-hexafluorobut-2-ene, pentafluoroethane and 1,1,1,2-tetrafluoroethane.

5. Composition according to one of Claims 1 to 4, the difference between the liquid saturation pressure and the vapor saturation pressure of which at a temperature of -5°C is less than or equal to 10% of the liquid saturation pressure, and which preferably comprises or consists of:

- from 1% to 8% of (E) -1,1,1,4,4,4-hexafluorobut-2-ene and from 92% to 99% of 2,3,3,3-tetrafluoropropene; or
- from 1% to 12% of (E) -1,1,1,4,4,4-hexafluorobut-2-ene and from 88% to 99% of 1,3,3,3-tetrafluoropropene; or
- from 1% to 9% of (E) -1,1,1,4,4,4-hexafluorobut-2-ene and from 91% to 99% of 1,1,1,2-tetrafluoroethane; or
- from 1% to 6% of (E) -1,1,1,4,4,4-hexafluorobut-2-ene and from 94% to 99% of difluoromethane; or
- from 1% to 17% of (E) -1,1,1,4,4,4-hexafluorobut-2-ene and from 83% to 99% of 1,1-difluoroethane; or
- from 1% to 26% of (E) -1,1,1,4,4,4-hexafluorobut-2-ene and from 74% to 99% of propane; or
- from 1% to 10% of (E) -1,1,1,4,4,4-hexafluorobut-2-ene and from 90% to 99% of 3,3,3-trifluoropropene; or
- from 1% to 10% of (E) -1,1,1,4,4,4-hexafluorobut-2-ene, from 1% to 98% of 1,1,1,2-tetrafluoroethane and from 1% to 98% of 1,3,3,3-tetrafluoropropene; or
- from 1% to 8% of (E) -1,1,1,4,4,4-hexafluorobut-2-ene, from 1% to 98% of 1,1,1,2-tetrafluoroethane and from 1% to 98% of 2,3,3,3-tetrafluoropropene; or
- from 1% to 15% of (E) -1,1,1,4,4,4-hexafluorobut-2-ene, from 1% to 98% of 1,1,1,2-tetrafluoroethane and from 1% to 98% of 1,1-difluoroethane; or
- from 1% to 8% of (E) -1,1,1,4,4,4-hexafluorobut-2-ene, from 1% to 98% of 2,3,3,3-tetrafluoropropene and from 1% to 98% of 3,3,3-trifluoropropene; or
- from 1% to 8% of (E) -1,1,1,4,4,4-hexafluorobut-2-ene, from 1% to 98% of 1,1,1,2-tetrafluoroethane and from 1% to 98% of 3,3,3-trifluoropropene; or
- from 1% to 8% of (E) -1,1,1,4,4,4-hexafluorobut-2-ene, from 1% to 98% of 2,3,3,3-tetrafluoropropene and from 1% to 98% of 1,3,3,3-tetrafluoropropene; or
- from 1% to 20% of (E) -1,1,1,4,4,4-hexafluorobut-2-ene, from 1% to 30% of 1,1,1,2-tetrafluoroethane and from 50% to 98% of propane; or
- from 1% to 20% of (E) -1,1,1,4,4,4-hexafluorobut-2-ene, from 1% to 98% of 2,3,3,3-tetrafluoropropene and from 1% to 98% of propane; or
- from 1% to 13% of (E) -1,1,1,4,4,4-hexafluorobut-2-ene, from 1% to 98% of 2,3,3,3-tetrafluoropropene and from 1% to 98% of 1,1-difluoroethane; or
- from 1% to 15% of (E) -1,1,1,4,4,4-hexafluorobut-2-ene, from 1% to 98% of 1,3,3,3-tetrafluoropropene and from 1% to 98% of 1,1-difluoroethane; or

- from 1% to 20% of (E) -1,1,1,4,4,4-hexafluorobut-2-ene, from 1% to 98% of 1,3,3,3-tetrafluoropropene and from 1% to 98% of propane.

6. Composition according to one of Claims 1 to 5, comprising and preferably consisting of:

- from 10% to 50% of (E) -1,1,1,4,4,4-hexafluorobut-2-ene and from 50% to 90% of 1,3,3,3-tetrafluoropropene, preferably from 30% to 40% of (E)-1,1,1,4,4,4-hexafluorobut-2-ene and from 60% to 70% of 1,3,3,3-tetrafluoropropene; or
- from 55% to 95% of (E) -1,1,1,4,4,4-hexafluorobut-2-ene and from 5% to 45% of 1,1,1,2-tetrafluoroethane; or
- from 1% to 98% of (E)-1,1,1,4,4,4-hexafluorobut-2-ene, from 1% to 98% of 2,3,3,3-tetrafluoropropene and from 1% to 50% of 1,1,1,2-tetrafluoroethane, preferably from 2% to 60% of (E)-1,1,1,4,4,4-hexafluorobut-2-ene, from 2% to 93% of 2,3,3,3-tetrafluoropropene and from 5% to 50% of 1,1,1,2-tetrafluoroethane and more particularly preferably from 5% to 45% of (E)-1,1,1,4,4,4-hexafluorobut-2-ene, from 11% to 86% of 2,3,3,3-tetrafluoropropene and from 9% to 44% of 1,1,1,2-tetrafluoroethane; or
- from 1% to 98% of (E)-1,1,1,4,4,4-hexafluorobut-2-ene, from 1% to 98% of 1,3,3,3-tetrafluoropropene and from 1% to 40% of 1,1,1,2-tetrafluoroethane, preferably from 2% to 40% of (E)-1,1,1,4,4,4-hexafluorobut-2-ene, from 20% to 93% of 1,3,3,3-tetrafluoropropene and from 5% to 40% of 1,1,1,2-tetrafluoroethane and more particularly preferably from 2% to 35% of (E)-1,1,1,4,4,4-hexafluorobut-2-ene, from 33% to 89% of 1,3,3,3-tetrafluoropropene and from 9% to 32% of 1,1,1,2-tetrafluoroethane.

7. Use of the composition according to one of Claims 1 to 6, as a heat-transfer fluid.

8. Heat-transfer composition comprising the composition according to one of Claims 1 to 6 and also one or more additives chosen from lubricants, stabilizers, surfactants, tracers, fluorescent agents, odorous agents and solubilizing agents, and mixtures thereof.

9. Heat-transfer equipment comprising a vapor compression circuit containing a composition according to one of Claims 1 to 6 as a heat-transfer fluid or containing a heat-transfer composition according to Claim 8.

10. Equipment according to Claim 9, chosen from mobile or stationary heat-pump heating, air conditioning, refrigeration and freezing equipment and Rankine cycles.

11. Process for heating or cooling a fluid or a body by means of a vapor compression circuit containing a heat-transfer fluid, said process successively comprising evaporation of the heat-transfer fluid, compression of the heat-transfer fluid, condensation of the heat-transfer fluid and expansion of the heat-transfer fluid, wherein the heat-transfer fluid is a composition according to one of Claims 1 to 6.

12. Process according to Claim 11, which is a process for cooling a fluid or a body, wherein the temperature of the fluid or of the body cooled is from -15°C to 15°C, preferably from -10°C to 10°C and particularly preferably from -5°C to 5°C; or which is a process for heating a fluid or a body, wherein the temperature of the fluid or of the body heated is from 30°C to 90°C, preferably from 35°C to 60°C and more particularly preferably from 40°C to 50°C.

13. Process for reducing the environmental impact of heat-transfer equipment comprising a vapor compression circuit containing an initial heat-transfer fluid, said process comprising a step replacing the initial heat-transfer fluid in the vapor compression circuit with a final heat-transfer fluid, the final heat-transfer fluid having a GWP which is lower than the initial heat-transfer fluid, wherein the final heat-transfer fluid is a composition according to one of Claims 1 to 6.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007053697 A
- WO 2008134061 A
- WO 2008154612 A
- WO 2010055146 A
- WO 2010100254 A